# EUROPEAN PATENT APPLICATION

(11) **EP 4 718 784 A1**
(43) Date of publication of application: **01.04.2026**
(21) Application number: 24203219.1
(22) Date of filing: 27.09.2024
(51) Int. Cl.: H04L 12/12, H04L 12/413

(54) **ETHERNET PHY, COMMUNICATION SYSTEM, AND METHOD FOR THE ETHERNET PHY**

(71) Applicant: NXP B.V., 5656 AG Eindhoven (NL)
(72) Inventor: Elend, Bernd Uwe Gerhard, 5656 AG Eindhoven (NL); Walrant, Thierry G. C., 5656 AG Eindhoven (NL)
(74) Representative: Schmütz, Christian Klaus Johannes

(57) **Abstract**

The present disclosure relates to an Ethernet Phy comprising: an analog interface for connecting to a communication media, a digital interface, and a wake-up interface, wherein the Ethernet Phy is configured to change from a sleep mode to an active mode, or vice versa, wherein the Ethernet Phy is configured to receive a first analog signal via the analog interface, wherein the first analog signal represents an Ethernet frame, wherein the Ethernet Phy is configured to transmit the Ethernet frame in the active mode only via the digital interface, wherein the Ethernet Phy is configured to receive a first wake-up signal in the sleep mode via the wake-up interface representing a first wake-up identifier or a second wake-up identifier, wherein the Ethernet Phy is configured to change from the sleep mode to the active mode in response to the case where the first wake-up signal representing one of the first or second wake-up identifier, and wherein the Ethernet Phy is configured to remain in the sleep mode in response to the case where the first wake-up signal representing the other one of the first or second wake-up identifier. The present disclosure also relates to a method for the Ethernet Phy.

## Description

### TECHNICAL FIELD

The present disclosure relates to an Ethernet Phy, a communication system including a plurality of Ethernet Phys, and a method for the Ethernet Phy.

### BACKGROUND

Modern automobiles include various electronic control units (ECUs) that implement, for example, engine control, power train control, airbag systems, antilock brake systems, cruise control, electric power steering, audio systems, window control systems, door control systems, mirror adjustment systems, and battery and recharging systems for hybrid/electric cars. The ECUs communicate with each other in an automobile via in-vehicle network (IVN) technologies such as Ethernet.

Ethernet is a well-known technology, and the Institute of Electrical and Electronic Engineers (IEEE) 802.3 Working Group is a collection of standards that define physical layer and data link layer media access control (MAC) for wired Ethernet.

An emerging IEEE standard that may be particularly applicable to in-vehicle networks is IEEE 802.3cg, which is a protocol for 10 Mb/s single twisted-pair Ethernet, also referred to as 10BASE-T1S. 10BASE-T1S can enable multiple Ethernet nodes to connect to the same twisted-pair wire, also referred to as a "shared media". The IEEE 802.3cg physical layer (PHY) does not utilize CSMA/CD (Carrier Sense Multiple Access, Collision Detection) and introduces "PLCA" (physical layer collision avoidance) for media access control.

Another emerging IEEE standard that may be particularly applicable to in-vehicle networks is IEEE 802.3bw, which is a protocol for 100 Mb/s Ethernet full duplex communication on a single twisted-pair, also referred to as 100BASE-T1. 100BASE-T 1 supports point-to-point connections. The latter one may require the usage of Ethernet switches in case more than two nodes want to communicate via 100BASE-T1 communication links.

The following explanations may apply to an Ethernet node configured for 10BASE-T1S or to an Ethernet node configured for 100BASE-T1.

Each Ethernet node may comprise a first part that is assigned to the physical layer according to the OSI model. The first part of the Ethernet node may also be referred to as the Ethernet Phy. The Ethernet Phy comprises an analog interface that can be coupled to a cable, in particular cases a shared media. The Ethernet Phy also comprises a digital interface. This interface may also be referred to and/or configured as a media-independent interface (MII). The Ethernet Phy may be formed by a circuitry of the Ethernet node. The Ethernet Phy may be configured in an example as an independent device. In this case, the Ethernet Phy may be implemented by a circuitry. The Ethernet Phy may also be configured as a device. The Ethernet Phy may be configured to receive an analog signal at the analog interface and transmit data represented by the analog signal at the digital interface. Furthermore, the Ethernet Phy may be configured to receive digital data at the digital interface and generate an analog signal at the analog interface that represents the digital data based on the received digital data.

Each Ethernet node may comprise a second part that is assigned to the data link level according to the OSI model. The second part of the Ethernet node may also be referred to as the Ethernet controller. The Ethernet controller may comprise a MAC unit that is used to control the media access. The Ethernet controller may have a (further) digital interface. The Ethernet controller may be coupled to the digital interface of the Ethernet Phy via the associated digital interface. The digital interface of the Ethernet controller may also be a media-independent interface.

Not every Ethernet node, and in particular not every Ethernet Phy, is continuously active. There may be a pause between two active communication phases during which no active communication takes place via the Ethernet node and/or the Ethernet Phy and where in particular not even an idle signal is being transmitted. During a pause, the Ethernet Phy may be driven into sleep mode to save electrical energy. Changing from sleep mode to an active mode, in which the Ethernet Phy regains the ability to send digital data over the digital interface, may take a certain amount of time. If a plurality of Ethernet nodes is arranged in a tree-like system, so that a plurality of Ethernet nodes is coupled along a path of the tree-like system, transition times may be added. The path may be a linear path in the tree-like system or be understood as a tree-like subsystem.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 shows a simplified block diagram of a communication system.
Figure 2 shows a simplified block diagram of an Ethernet Phy.
Figure 3 shows a simplified flow chart of a method for the Ethernet Phy.

### DESCRIPTION OF EMBODIMENTS

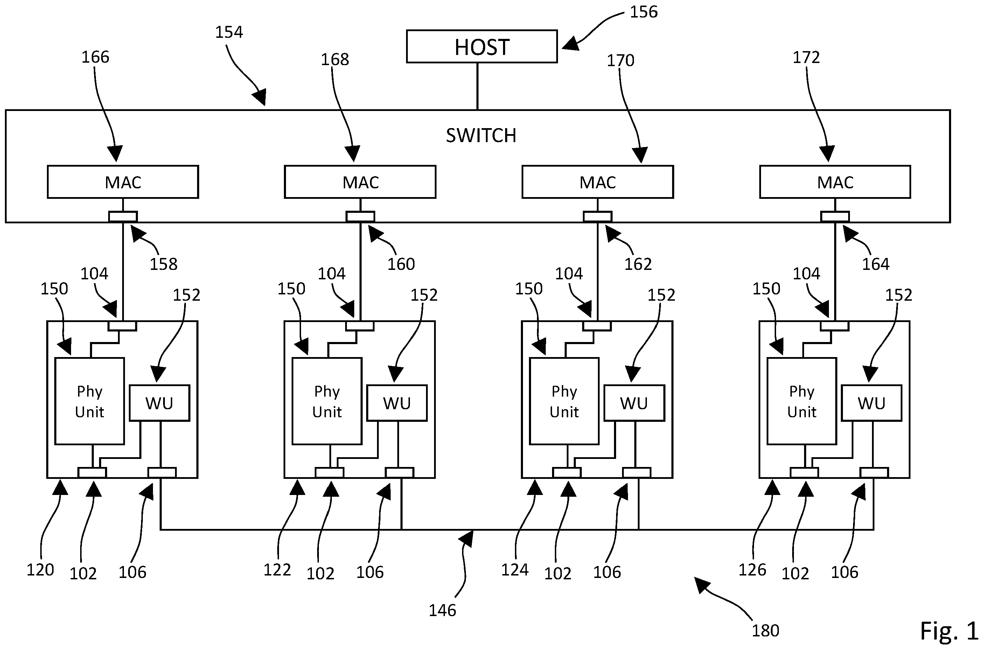

Figure 1 is a schematic diagram of an example of a communication system 180. The communication system 180 may comprise a switch unit 154. The switch unit 154 may also be referred to as a switch 154 or as an Ethernet switch 154. In addition, the communication system 180 may comprise a host unit 156. The host unit 156 may also be referred to as host 156. The switch unit 154 may be coupled to the host unit 156. The communication system 180 may also comprise a plurality of Ethernet Phys 120, 122, 124, 126.

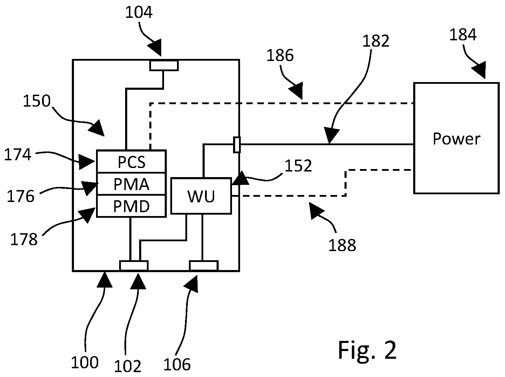

An example of an Ethernet Phy 100 is shown schematically in Figure 2. The Ethernet Phy 100 may be designed as a device. Each of the Ethernet Phys 120, 122, 124, 126 of the communication system 180 may be formed by an Ethernet Phy 100.

The following explanations, features, technical effects, and advantages with respect to the example of the Ethernet Phy 100 from Figure 2 may be analogously applied to each Ethernet Phy 120, 122, 124, 126 of the communication system 180. This relationship may also be analogously applied in the opposite direction. The following explanations, features, technical effects, and advantages for at least one of the Ethernet Phys 120, 122, 124, 126 of the communication system 180 may be analogously related to the example of the Ethernet Phys 100 from Figure 2.

In an example, the Ethernet Phy 100 may comprise an analog interface 102, a digital interface 104 and a further interface 106, which is also referred to as a wake-up interface 106. The analog interface 102, the digital interface 104, and the wake-up interface 106 may be understood as different interfaces 102, 104, 106.

The analog interface 102 of the Ethernet Phys 100 may be configured to be coupled to a communication media, in particular to a twisted wire pair or the at least one conductive track on the PCB. The communication media may be used to establish a direct connection to an analog interface 102 of another Ethernet Phy 100. In another example, the communication media may be configured as shared media. Multiple Ethernet Phys 100 may be coupled to the same shared media via their associated analog interface 102. This type of coupling may also be referred to as multi-drop. The analog interface 102 may be configured to transmit or receive an analog signal representing digital data.

The digital interface 104 of the Ethernet Phy 100 may be configured to transmit digital data. In an example, multiple bits of digital data may be transmitted in parallel via the digital interface 104. In an example, the digital interface 104 may be configured as a media-independent interface. The digital interface 104 of the Ethernet Phy 100 may be configured to transmit data to a (further) digital interface 158, 160, 162, 164 of the switch unit 154. The digital interface 104 of the Ethernet Phy 100 may be configured to receive digital data, in particular from a digital interface 158 of the switch unit 154.

The wake-up interface 106 may be configured as an analog interface or as a digital interface. The wake-up interface 106 may be configured to be coupled to a signal line 146. The signal line 146 may be formed by at least one wire, in particular by a twisted wire pair. In another example, the signal line 146 may be formed by at least one conductive track, in particular two conductive tracks, on a printed circuit board (PCB). In an example, a plurality of Ethernet Phys 100 may be coupled to the same signal line 146 via their respective wake-up interfaces 106. The signal line 146 may also be referred to as a wake-up signal line 146 or a wake-up media 146.

In an example, the Ethernet Phy 100 may comprise a Phy unit 150. The Phy unit 150 may be coupled between the digital interface 104 and the analog interface 102. The Phy unit 150 may be configured to receive digital data via the digital interface 104. In addition, the Phy unit 150 may be configured to generate an analog signal at the analog interface 102 that represents the digital data. If data is received via the digital interface 104 and an analog signal is generated via the Phy unit 150 at the analog interface 102 that represents the digital data, then the corresponding direction in which the data is transported may be referred to as the transmit direction. A (different) analog signal representing (different) digital data may be received via the analog interface 102 of the Ethernet Phy 100. The Phy unit 150 of the Ethernet Phy 100 may be configured to transmit digital data corresponding to the data represented by the analog signal via the digital interface 104, based on the received analog signal. The direction in which the data is processed may be referred to as the receive direction.

The Phy unit 150 may be formed by a circuitry of the Ethernet Phy 100. The Phy unit 150 may comprise several sub-units, such as the PCS unit 174, the PMA unit 176, and the PMD unit 178.

In an example, each Phy unit 150 may include a unit in the physical coding sublayer, also referred to as PCS unit 174. In an example, the PCS unit 174 may be formed by the circuit unit of the respective Ethernet Phy 100. The PCS unit 174 may be configured in accordance to the 10BASE-T1S or the 100BASE-T 1 Standard. In an example, each Phy unit 150 may include a physical medium attachment unit, also referred to as PMA unit 176. The PMA unit 176 may be formed by the circuit unit of the respective Ethernet Phy 100. The PMA unit 176 may be configured in accordance with the 10BASE-T1S or the 100BASE-T1 standard. In an example, each Phy unit 150 may include a unit in the physical media dependent layer, also referred to as PMD unit 178. In an example, the PMD unit 178 may be formed by the circuit unit of the respective Ethernet Phy 100. The PMD unit 178 may be configured according with the 10BASE-T1S or the 100BASE-T1 standard.

Each PCS unit 174 may be configured to perform data scrambling and recoding, in particular 4B5B recoding. Each PCS unit 174 may include a PCS transmit unit and a PCS receive unit, and a collision detection unit. The PCS transmit unit may include a scrambler and a unit for 4bit-5bit encoding. Each PCS receive unit may include a descrambler and a unit for 4bit-5bit decoding. In the transmit direction, each PCS unit 174 may be configured to translate data words each comprising 4 bits into data words each comprising 5 bits. The 5-bit words can be transmitted to the PMA unit 176. In the reverse direction, i.e. receive direction, the PCS unit 174 can receive data words that are each 5 bits long. In the receive direction, the PCS unit 174 may be configured to translate a data word comprising 5 bits into a data word comprising 4 bits.

Each PMA unit 176 may be configured to receive, in the transmit direction, data from a PCS unit 174 and generate an analog output signal based on the received data that represents the data received by the PCS unit 174. The data received by the PCS unit 174 may be represented by the analog output signal according to a predefined encoding, such as differential Manchester encoding. Each PMA unit 176 may further be configured to receive, in the receive direction, an analog signal representing data. The data received via the analog signal may be translated by the PMA unit 176 into words, each in particular comprising 5 bits. The words may represent the data of the analog signal.

Each PMD unit 178 may be configured to adapt the analog signal in the transmit direction, in particular with respect to the length of pulses or the edge steepness of pulses. Each PMD unit 178 may be configured to sample the analog signal in the receive direction. Each PMD unit 178 may be coupled to the MDI interface 102 of the respective Ethernet Phy 100.

It was explained that the Phy unit 150 may be coupled between the digital interface 104 and the analog interface 102. The PCS unit 174 of the Phy unit 150 may be coupled to the digital interface 104 of the Ethernet Phys 100. The PMD unit 178 of the Phy unit 150 may be coupled to the analog interface 102 of the Ethernet Phys 100. In an example, the Phy unit 150 is not coupled to the wake-up interface 106. In particular, the wake-up interface 106 is not used for communicating Ethernet data. For example, the Phy unit 150 may be coupled for communicating Ethernet data, such as Ethernet frame data, only with the digital interface 104 and the analog interface 102.

The Ethernet Phy 100 is configured to change from a sleep mode to an active mode. Furthermore, the Ethernet Phy 100 is configured to change from active mode to sleep mode. In an example, the Ethernet Phy 100 is configured so that the Ethernet Phy 100 is only able to send and/or receive digital data via the digital interface 104 in active mode. In active mode, for example, the Phy unit 150 can be supplied with electrical energy and clock signals to process data, especially in the receive direction and/or transmit direction. The Ethernet Phy 100 may be configured to control a power supply for the Phy unit 150 in active mode. The Ethernet Phy 100 may be configured to prevent (via control) the power supply for the PHY Unit 150 in sleep mode. As an effect, the PHY Unit 150 can be supplied with electrical energy in active mode and not supplied with electrical energy in sleep mode. As a further effect, the PHY Unit 150 can only be operational in active mode, but not in sleep mode.

In an example, the Ethernet Phy 100 may be comprised of a wake-up unit 152. The wake-up unit 152 may be configured to cause and/or control the change from the sleep mode of the Ethernet Phy 100 to the active mode of the Ethernet Phy 100, or vice versa. The wake-up unit 152 may be configured to be operational regardless of the sleep mode and/or the active mode. In an example, the wake-up unit 152 may be operational in both the active mode and the sleep mode. The wake-up unit 152 may be configured in an example to enable power supply to the Phy unit 150 in the active mode and to disable power supply to the Phy unit 150 in the sleep mode. In an example, the wake-up unit 152 may be configured to generate a control signal. The wake-up unit 152 may be configured to transmit the control signal to a power supply unit 184 via a control signal connection 182. The power supply unit 184 may be configured to supply the Phy unit 150 with electrical energy via a first power supply connection 186. In addition, the power supply unit 184 may supply the wake-up unit 152 with electrical energy via a further, second power supply connection 188. In an example, the power supply unit 184 may be configured to supply the wake-up unit 152 with electrical energy regardless of the active mode or the sleep mode. The wake-up unit 152 may be configured to generate the sleep mode control signal such that the control signal represents an instruction not to supply electrical power to the Phy unit 150. In response to said control signal, the power supply unit 184 may interrupt the supply of electrical power to the Phy unit 150 via the first power supply connection 186. As an effect, the Phy unit 150 is not supplied with electrical energy in sleep mode. The wake-up unit 152 may be configured to generate the control signal for the active mode such that the control signal represents a (different) instruction to (re)supply the Phy unit 150 with electrical energy. In response to said control signal, the power supply unit 184 may be configured to re-enable power supply to the Phy unit 150 via the first power supply connection 186, such that the Phy unit 150 is supplied with electrical power in active mode.

The Ethernet Phy 100, in particular the Phy unit 150 of the Ethernet Phy 100, is configured to receive a first analog signal via the analog interface 102. The first analog signal represents an Ethernet frame. The Ethernet frame may consist of a plurality of predefined fields, each comprising bits. The Ethernet frame may be configured according to the 10BASE-T1S protocol or the 100Base-TX protocol. In an example, the Ethernet Phy 100, in particular the Phy unit 150 of the Ethernet Phy 100, is configured to receive the first analog signal only in active mode via the analog interface 102. As an effect, in the example, the Ethernet Phy 100, in particular the associated Phy unit 150, is not capable of receiving the first analog signal via the analog interface 102 in sleep mode.

The Ethernet Phy 100, in particular the Phy unit 150 of the Ethernet Phy 100, is configured to transmit the Ethernet frame previously received via the first analog signal only in active mode via the digital interface 104. Before the Ethernet frame can be transmitted via the digital interface 104, the Ethernet Phy 100, in particular the associated Phy unit 150, must change to or be already be in active mode. If the Ethernet Phy 100, in particular the associated Phy unit 150, is in sleep mode, the Ethernet Phy 100, in particular the associated Phy unit 150, may not be able to transmit the Ethernet frame via the digital interface 104.

It was explained that the Ethernet Phy 100 is configured to change from sleep mode to active mode, or vice versa. The underlying idea of this publication is that the Ethernet Phy 100 should not change from sleep mode to active mode in every situation, but only in certain situations. In some situations, it may be useful for the Ethernet Phy 100 to remain in sleep mode. In some other situations, it may be useful for the Ethernet Phy 100 to change to active mode.

The Ethernet Phy 100 comprises the wake-up interface 106. The Ethernet Phy 100 is configured to receive a first wake-up signal in sleep mode via the wake-up interface 106. The first wake-up signal represents a first identifier or a second identifier. The first identifier may also be referred to as the first wake-up identifier. The second identifier may also be referred to as the second wake-up identifier. The two wake-up identifiers enable the Ethernet Phy 100 to determine whether and at which wake-up identifier the Ethernet Phy 100 changes from sleep mode to active mode, or alternatively remains in sleep mode. The first wake-up identifier differs from the second wake-up identifier. In an example, it is intended that the Ethernet Phy 100 only changes from sleep mode to active mode in response to receiving the first wake-up identifier.

The Ethernet Phy 100 is configured to change from sleep mode to active mode if the first wake-up signal represents one of the two wake-up identifiers, in particular the first wake-up identifier. Furthermore, the Ethernet Phy 100 is configured to remain in sleep mode if the first wake-up signal represents the other of the two wake-up identifiers, in particular the second wake-up identifier. In both cases, it may be assumed in an example that the Ethernet Phy 100 was previously in sleep mode.

Since the first wake-up signal can also be received via the wake-up interface 106 of the Ethernet Phy 100 in sleep mode, the Ethernet Phy 100 may either change from sleep mode to active mode or remain in sleep mode, according to whether the first wake-up signal represents the first wake-up identifier or the second wake-up identifier. The advantage of the first wake-up signal and/or the two wake-up identifiers is that the first wake-up signal can be sent to a plurality of Ethernet Phy 100, wherein each individual Ethernet Phy 100 may decide based on the first wake-up signal whether the respective Ethernet Phy 100 remains in sleep mode or changes from sleep mode to active mode. As an effect, electrical energy may be saved because only certain Ethernet Phys 100 of the system 180 change from sleep mode to active mode.

In an example, each wake-up identifier may identify at least one Ethernet Phy 100 directly or indirectly. Regardless of whether a wake-up identifier directly or indirectly identifies at least one Ethernet Phy 100, the decision as to whether the respective Ethernet Phy 100 remains in sleep mode or changes from sleep mode to active mode based on the respective wake-up identifier can be determined by the respective Ethernet Phy 100 itself. The respective Ethernet Phy 100 may be configured to determine the respective decision. This approach offers the possibility that the same, first wake-up signal can be sent to a plurality of Ethernet Phys 100, and that each Ethernet Phy 100 determines for itself whether the respective Ethernet Phy 100 remains in the sleep mode or changes from the sleep mode to the active mode based on the wake-up identifier. As an effect, a communication system may be easily expanded, wherein the aforementioned concept may be realized by each of the Ethernet Phys 100.

Figure 1 schematically illustrates an example of an Ethernet communication system 180. The Ethernet communication system 180 comprises a plurality of Ethernet Phys 120, 122, 124, 126. In an example, the communication system 180 may comprise at least a first Ethernet Phy 120, a second Ethernet Phy 122, a third Ethernet Phy 124 and a fourth Ethernet Phy 126. Each of the Ethernet Phys 120, 122, 124, 126 may be configured in accordance with the Ethernet Phy 100. For each of the Ethernet Phys 120, 122, 124, 126, reference may be made to the preceding explanations, features, technical effects and advantages in an analogous manner as explained before for the Ethernet Phy 100, 120, 122, 124, 126.

The Ethernet communication system 180 may also comprise the switch unit 154. For each Ethernet Phy 120, 122, 124, 126, the switch unit 154 may comprise a respectively assigned MAC unit 166, 168, 170, 172.

In an example, the switch unit 154 may comprise a first MAC unit 166. The first MAC unit 166 may be associated with the first Ethernet Phy 120. The switch unit 154 may comprise a first switch interface 158 coupled to the first MAC unit 166. The first switch interface 158 may be a digital interface. In an example, the first MAC unit 166 may be coupled via the first switch interface 158 to the first digital interface 104 of the first Ethernet Phy 120. In an example, the switch unit 154 may comprise a second MAC unit 168. The second MAC unit 168 may be associated with the second Ethernet Phy 122. The switch unit 154 may comprise a second switch interface 160 coupled to the second MAC unit 168. The second switch interface 160 may be a digital interface. In an example, the second MAC unit 168 may be coupled via the second switch interface 160 to the digital interface 104 of the second Ethernet Phy 122. In an example, the switch unit 154 may comprise a third MAC unit 170. The third MAC unit 170 may be associated with the third Ethernet Phy 124. The switch unit 154 may comprise a switch interface 162 that is coupled to the third MAC unit 170. The third switch interface 162 may be a digital interface. In an example, the third MAC unit 170 may be coupled via the third switch interface 162 to the third digital interface 104 of the third Ethernet Phy 122. The foregoing explanations, features, technical effects and advantages may be similarly applicable to the fourth MAC unit 172, the fourth switch interface 164 and the fourth Phy unit 126.

The wake-up interfaces 106 of the multiple Ethernet Phys 120, 122, 124, 126 may be coupled via a signal connection 146, which may also be referred to as a wake-up media 146. If, in an example, the second Ethernet Phy 122 generates a wake-up signal at the associated wake-up interface 106, then the wake-up signal may be transmitted via the wake-up media 146 to the other wake-up interface 106 of the other Ethernet Phys 120, 124, 126. The wake-up signal may represent a first wake-up identifier or a second wake-up identifier.

If the wake-up signal is received via the wake-up interface 106 of an Ethernet Phy 120, 124, 126 via the associated wake-up interface 106, then the received wake-up signal may be referred to as the first wake-up signal.

In an example, the first Ethernet Phy 120 and the third Ethernet Phy 124 may each be configured to change from sleep mode to active mode if the first wake-up signal represents the first wake-up identifier. The first Ethernet Phy 120 and the third Ethernet Phy 124 may each be configured to remain in the sleep mode if the first wake-up signal represents the second wake-up identifier.

In another example, in particular not relating to the above examples, the second Ethernet Phy 122 and the fourth Ethernet Phy 126 may each be configured to change from sleep mode to active mode if the first wake-up signal represents the second wake-up identifier. The second Ethernet Phy 122 and the fourth Ethernet Phy 126 may each be configured to remain in the sleep mode if the first wake-up signal represents the first wake-up identifier.

In an example, it is assumed that the first Ethernet Phy 120, the third Ethernet Phy 124 and the fourth Ethernet Phy 126 are each in the sleep mode. The second Ethernet Phy 122 may be in active mode. For the example, it is further assumed that the second Ethernet Phy 122 generates a wake-up signal and transmits it via the associated wake-up interface 106, where the wake-up signal represents only the first wake-up identifier. The wake-up signal may be transmitted via the wake-up media 146 to the wake-up interfaces 106 of the other Ethernet Phys 120, 124, 126, wherein the received wake-up signal being referred to as the first wake-up signal for the Ethernet Phy 120, 124, 126. Since the first wake-up signal represents the first wake-up identifier, the fourth Ethernet Phy 126 will remain in sleep mode. The first Ethernet Phy 120 and the third Ethernet Phy 124 will each change from sleep mode to active mode based on the present case, namely that the first wake-up signal represents the first wake-up identifier. The advantage of using a wake-up signal that represents the first wake-up identifier or the second wake-up identifier is that it is possible to decide which of the at least one Ethernet Phy 120, 124 is to be switched from sleep mode to active mode by selecting which wake-up identifier is represented by the wake-up signal. At the same time, it may be decided by selecting which wake-up identifier is represented by the wake-up signal, which of the at least one Ethernet Phys 126 remains in sleep mode. As an effect, the choice of which wake-up identifier is represented by a wake-up signal can be used to quickly and easily determine which of the at least one Ethernet Phy 126 remains in sleep mode and which other of the at least one Ethernet Phy 120, 124 changes from sleep mode to active mode. As an additional effect, energy may be saved simply and efficiently in this way. Furthermore, the use of the wake-up signal offers the possibility that several Ethernet Phys 120, 124 can be switched from sleep mode to active mode with a small time delay or concurrently.

In an example, a wake-up identifier, which is represented by the wake-up signal, may be encoded by the wake-up signal. The encoding may be in accordance with a predefined encoding scheme. The encoding may be defined in accordance with a protocol. In an example, each wake-up identifier may be defined by a plurality of bits represented by the wake-up signal. The values and/or the order of the bits may be predefined for each wake-up identifier. There may be a unique and/or exclusive combination of bits for each wake-up identifier due to the predefined combination of bits. Each Ethernet Phy 120, 122, 124, 126 may be configured to detect the bits represented by a wake-up signal. Each Ethernet Phy 120, 122, 124, 126 may be configured to detect a wake-up identifier based on the detected bits. As an effect, for example, the first Ethernet Phy 120 and the third Ethernet Phy 124 may be configured to detect the bits predefined for the first wake-up identifier if the bits, in particular in the predefined order, are represented by the first wake-up signal.

In an example, a wake-up identifier represented by the wake-up signal may be modulated by the wake-up signal. In an example, the modulating may be in accordance with a predefined modulating scheme. The above explanations, features, technical effects and advantages, as explained in connection with the coding, may apply in an analogous manner to the modulation.

In a further example the wake-up signal may include start, stop, synchronization and collision avoidance signals.

In an example, the first wake-up identifier may address exactly one Ethernet Phy 120 or a first group of Ethernet Phys 120, 124. With reference to the example mentioned earlier in connection with Figure 1, the first wake-up identifier may, for example, address the first Ethernet Phy 120 and the third Ethernet Phy 124. The first wake-up identifier may, for example, comprise the address of the first Ethernet Phy 120 and the address of the third Ethernet Phy 124. The address of an Ethernet Phy 120, 124 may be a predefined, unique number.

In an example, the second wake-up identifier may address exactly one (other) Ethernet Phy 126 or a second group of Ethernet Phys 122, 126. In an example, the second wake-up identifier address(es) different Ethernet Phys 122, 126 than the first wake-up identifier. In an example, the first wake-up identifier and the second wake-up identifier do not represent duplicate addresses of an Ethernet Phy 120-126.

Each Ethernet Phy 120-126 may have the respective associated address stored. Furthermore, each Ethernet Phys 120, 126 may be configured to detect, based on a received wake-up signal, whether the respective wake-up signal represents the address stored. If an Ethernet Phy 120-126 receives a first wake-up signal, where the wake-up identifier represented by the first wake-up signal represents the address stored by the respective Ethernet Phy 120-126, then in an example this wake-up identifier may be understood as the first wake-up identifier. If an Ethernet Phy 120-126 receives a wake-up signal in which the wake-up identifier represented by the wake-up signal does not represent the address stored by the respective Ethernet Phy 120-126, then in an example this wake-up identifier may be understood as the second wake-up identifier.

In an example, it is envisaged that a wake-up identifier does not represent the address of a single Ethernet Phy 120-126 or the addresses of a group of Ethernet Phys 120-126. Instead, a wake-up identifier may be used to represent a predefined wake-up scenario. The wake-up scenario may also be understood as a codeword. In an example, the first wake-up identifier may represent a first wake-up scenario. The second wake-up identifier may represent a second wake-up scenario. The two wake-up scenarios may be different. In an example, the two wake-up scenarios may be different codewords. In an example, the first wake-up scenario may be "engine". In an example, the second wake-up scenario may be "transmission". The two examples show words for the scenarios. However, the wake-up scenarios are not limited to words. In an example, a unique codeword and/or a unique combination of bits may be used for each wake-up scenario.

In an example, each Ethernet Phy 120-126 is configured to store at least one wake-up scenario, in particular either the first wake-up scenario or the second wake-up scenario. The stored wake-up scenario allows the respective Ethernet Phy 120-126 in an example to have the information about which wake-up scenario the respective Ethernet Phy 120-126 has to use to change from sleep mode to active mode, in particular only at a stored wake-up scenario. For example, an Ethernet Phy 120-126 may be configured to change from sleep mode to active mode if a received wake-up signal represents a wake-up identifier that in turn represents and/or is one of the at least one wake-up scenario stored by the respective Ethernet Phy 120-126.

In an example, the first wake-up identifier may be formed from the first wake-up scenario, or vice versa. As an effect, the first wake-up identifier and the first wake-up scenario may be identical. However, it is also possible that the first wake-up identifier comprises or represents the first wake-up scenario. In an example, the second wake-up identifier may be formed by the second wake-up scenario, or vice versa. As an effect, the second wake-up identifier and the second wake-up scenario may be identical. However, it is also possible that the second wake-up identifier comprises or represents the second wake-up scenario.

It was explained earlier that a wake-up scenario in an example is to be understood as a codeword. A codeword may be, for example, "motor", "transmission", another word or a combination of characters. A codeword may also consist of a combination of predefined bits. Each Ethernet Phy 120-126 may have stored the at least one wake-up scenario relevant to the respective Ethernet Phy 120-126. As an effect, each Ethernet Phy 120-126 may decide, based on the wake-up scenario, which may be represented directly or indirectly via a wake-up signal, whether the wake-up scenario is relevant and/or stored for the respective Ethernet Phy 120-126. If, for example, an Ethernet Phy 120-126 has the codeword "motor" stored as a wake-up scenario, then the Ethernet Phy 120-126 may be able to determine, after receiving a first wake-up signal, whether the wake-up identifier represented by the wake-up signal matches the stored wake-up scenario. If the wake-up identifier represented by the wake-up signal directly or indirectly represents the wake-up scenario stored by the respective Ethernet Phy 120-126, in the above example the codeword "Motor", then the match may cause the respective Ethernet Phy 120-126 to change from sleep mode to active mode. Otherwise, the Ethernet Phy 120-126 may remain in sleep mode.

In an example, each Ethernet Phy 120-126 is configured to change from sleep mode to active mode only in the case where a wake-up identifier represented by a received first wake-up signal represents the wake-up scenario stored by the respective Ethernet Phy 120-126. The first Ethernet Phy 120 may be configured, for example, to change from sleep mode to active mode only in the case where the wake-up identifier represented by the first wake-up signal represents the first wake-up scenario. In an example, the first wake-up identifier may be identical to the first wake-up scenario. However, if the first wake-up signal represents a second wake-up identifier that in turn represents the second wake-up scenario, then the first Ethernet Phy 120 may remain in sleep mode.

The advantage of using different wake-up scenarios is that a single wake-up scenario can be used to simultaneously cause a large number of Ethernet Phys 120-126 to change from sleep mode to active mode. Furthermore, an Ethernet communication system 180 can be expanded to include further Ethernet Phys 120-126 without having to change the previously defined wake-up scenarios. Each additional Ethernet Phy 120-126 may have a wake-up scenario relevant to the respective Ethernet Phys 120-126 stored. As a result, the previously defined wake-up scenarios can also be used for the other Ethernet Phys.

It was explained that the first wake-up signal may represent a first wake-up identifier or a second wake-up identifier. In one example, it is possible that no further wake-up identifiers are provided, so that the first wake-up signal represents either the first wake-up identifier or the second wake-up identifier. In another example, it is possible that the first wake-up signal may also represent further wake-up identifiers. For example, the first wake-up signal may represent the first wake-up identifier, the second wake-up identifier, or a third wake-up identifier. In the context of Figure 1, an example was given above in which the first Ethernet Phy 120 changes from sleep mode to active mode if the received first wake-up signal represents the first wake-up identifier. If the received first wake-up signal represents the second wake-up identifier, the first Ethernet Phy 120 may remain in sleep mode. In an example, the first Ethernet Physical Layer 120 may also be configured to change from sleep mode to active mode if the received first wake-up signal represents the third wake-up identifier. As an effect, the first Ethernet Phy 120 in an example may change from sleep mode to active mode in both cases, namely if the received first wake-up signal represents either the first wake-up identifier or the third wake-up identifier. In an Ethernet communication system 180, different groups of Ethernet Phys 120-126 may be selectively awakened from sleep mode to active mode via the plurality of wake-up identifiers. The first wake-up signal may be sent to all Ethernet Phys 120-126 of the Ethernet communication system 180. Each Ethernet Phys 120-126 can decide individually whether the respective Ethernet Phys 120-126 changes from sleep mode to active mode or not. Therefore, the use of multiple wake-up identifiers also offers the advantage of enabling multiple Ethernet Phys 120-126 to be woken up quickly or concurrently.

It was explained above that each Ethernet Phy 120-126 is configured to receive an analog signal via analog interface 102, where the first analog signal may represent an Ethernet frame. This analog signal is referred to as the first analog signal. In addition, each Ethernet Phy 120-126 may be configured to transmit a different analog signal via analog interface 102. This analog signal to be transmitted may be referred to as the second analog signal.

In an example, each Ethernet Phy 120-126 may be configured to generate a second analog signal in response to receiving the first wake-up signal. Each Ethernet Phy 120-126 may be configured to generate the second analog signal such that the second analog signal represents a wake-up instruction, which may also be referred to as a first wake-up instruction. The first wake-up instruction may comprise or represent the wake-up identifier represented by the first wake-up signal. In an example, the first wake-up instruction may be identical to the wake-up identifier represented by the first wake-up signal. As an effect, the wake-up identifier represented by the first wake-up signal may be forwarded directly or indirectly via the first wake-up instruction. The forwarding is performed via the second analog signal. The second analog signal may in turn be received by another Ethernet Phy via the associated analog interface 102, so that the respective Ethernet Phy may change from a sleep mode to an active mode on the basis of the first wake-up instruction.

In an example, the wake-up unit 152 of the Ethernet Phy 120-126 may be coupled to the analog interface 102 of the respective Ethernet Phy 120-126. The wake-up unit 152 may be configured to generate the second analog signal at the analog interface 102. In an example, the wake-up unit 152 may be configured to generate the second analog signal at the analog interface 102 in response to receiving the first wake-up signal at the wake-up interface 106. The wake-up unit 152 may be configured to detect the wake-up identifier represented by the first wake-up signal. Furthermore, the wake-up unit 152 may be configured to generate the second analog signal such that the first wake-up instruction comprises or represents the detected wake-up identifier or such that the first wake-up instruction is formed by the detected wake-up identifier.

In an example, the first wake-up signal may represent the first wake-up identifier. If the first wake-up signal is received via the wake-up interface 106 by the Ethernet Phy 120, then the Ethernet Phy 120 may change from sleep mode to active mode in response to receiving the first wake-up signal that represents the first wake-up identifier. Furthermore, in response to receiving the first wake-up signal, the Ethernet Phys 120 may generate the second analog signal at the analog interface 102, which represents the first wake-up instruction. The first wake-up instruction may be formed by the first wake-up identifier, or the first wake-up instruction may comprise or represent the first wake-up identifier. As an effect, the request to wake up Ethernet Phys 120-126 can be easily and quickly forwarded via the analog interface 102.

In another example, the first wake-up signal may represent the second wake-up identifier. If the first wake-up signal is received via the wake-up interface by the Ethernet Phy 120, then the Ethernet Phy 120 may be configured to remain in sleep mode in response to receiving the first wake-up signal representing the second wake-up identifier, provided that the Ethernet Phy 120 was previously in sleep mode. In an example, the Ethernet Phy 120 may also be configured while in sleep mode to generate, in response to receiving the first wake-up signal, the second analog signal at the analog interface 102 that represents the first wake-up instruction. In this case, the first wake-up instruction may be formed by the second wake-up identifier or the first wake-up instruction may comprise or represent the second wake-up identifier. In an example, the wake-up unit 152 may also be configured in the sleep mode of the Ethernet Phy 120 to generate the second analog signal at the analog interface 102. As an effect, forwarding the request to wake up Ethernet Phy 120-126 can be performed quickly and efficiently via the analog interface 102.

In the preceding explanations, many advantageous features, technical effects and advantages were explained that may be associated with receiving a wake-up signal at a wake-up interface 106 of an Ethernet Phy 120-126. In an example, it is also possible for the Ethernet Phy 120-126 to receive via the analog interface 102 another analog signal, namely a third analog signal, wherein the third analog signal representing a second wake-up instruction. The Ethernet Phy 120-126 may be configured to change from the sleep mode to the active mode in response to receiving the second wake-up instruction represented by the third analog signal. In an example, the second wake-up instruction may comprise or represent the first wake-up identifier. In a further example, the second wake-up instruction may be formed by the first wake-up identifier. The change from sleep mode to active mode may be performed in particular in the event that the Ethernet Phy 120-126 was previously in sleep mode.

In an example, the Ethernet Phy 120-126 may be configured to transmit a second wake-up signal via the wake-up interface 106 in response to receiving the second wake-up instruction. Generally, receiving a wake-up instruction may be understood in an example to receive an analog signal representing the respective wake-up instruction. Thus, receiving the second wake-up instruction may be understood in an example to receive the third analog signal representing the second wake-up instruction. Further, receiving an identifier may be understood in an example to receive a wake-up signal representing the respective wake-up identifier. In an example, the Ethernet Phys 120-126 may be configured to generate the second wake-up signal in response to receiving the second wake-up instruction such that the second wake-up signal represents the first wake-up identifier. In an example the second wake-up instruction comprises, represents, or forms a first wake-up identifier. The Ethernet Phy 120 may be configured to generate the second wake-up signal such that the second wake-up signal represents the wake-up identifier that is also represented by the second wake-up instruction. The wake-up identifier may be, for example, the first wake-up identifier. As an effect, the wake-up identifier, in particular the first wake-up identifier, may be translated from the second wake-up instruction to the second wake-up signal. The second wake-up signal may be transmitted via the wake-up media 146 to the wake-up interfaces 106 of the further Ethernet Phys 122, 124, 126. Each of the further Ethernet Phys 122, 124, 126 may be configured to determine based on the second wake-up signal whether the wake-up identifier represented by the second wake-up signal triggers a change from a sleep mode to an active mode (or not).

The wake-up interfaces 106 of the Ethernet Phys 120-126 provide the ability for a plurality of Ethernet Phys 120-126 to be triggered to change from the sleep mode to the active mode. For example, the Ethernet Phy 120 may receive a wake-up instruction via a third analog signal and, in response to receiving the third analog signal, to send a second wake-up signal to further Ethernet Phys 120-126 to be woken up selectively, quickly and efficiently.

In an example, the second wake-up instruction and the wake-up identifier represented by the first wake-up signal may address the same Ethernet Phy 120-126, the same group of Ethernet Phys 120-126, or the same wake-up scenario. In an example, the first Ethernet Phy 120 may receive a third analog signal via analog interface 102, wherein the third analog signal represents the second wake-up instruction. The second wake-up instruction may represent a predefined scenario, such as the "motor" scenario. The wake-up unit 152 of the first Ethernet Phy 120 may be coupled to the analog interface 102. The wake-up unit 152 may be configured to receive the third analog signal via the analog interface 102. The wake-up unit 152 of the first Ethernet Phy 120 may be configured to generate the second wake-up signal in response to receiving the second wake-up instruction (via the third analog signal) such that the second wake-up signal represents a wake-up identifier. The wake-up identifier represented by the second wake-up signal may represent the same scenario as the second wake-up instruction. In an example, the wake-up identifier represented by the second wake-up signal may represent the "motor" scenario. In an example, the wake-up unit 152 of the first Ethernet Phy 120 is coupled to the wake-up interface 106 of the first Ethernet Phy 120. The wake-up unit 152 may be configured to transmit the second wake-up signal via the wake-up interface 106. The wake-up interface 106 of the first Ethernet Phy 120 may be coupled to the wake-up interfaces 106 of the further Ethernet Phys 122, 124, 126 via the wake-up media 146. Each of the further Ethernet Phys 122, 124, 126 may receive the second wake-up signal via the associated wake-up interface 106. With regard to the other Ethernet Phys 122, 124, 126, the received wake-up signal is referred to as the first wake-up signal. In this example, the second wake-up signal and the first wake-up signal may be identical. Each of the further Ethernet Phys 122, 124, 126 may be configured to determine based on the scenario represented by the first wake-up signal (or second wake-up signal) whether the respective Ethernet Phy 122, 124, 126 changes from sleep mode to active mode or whether the respective Ethernet Phy 122, 124, 126 remains in sleep mode.

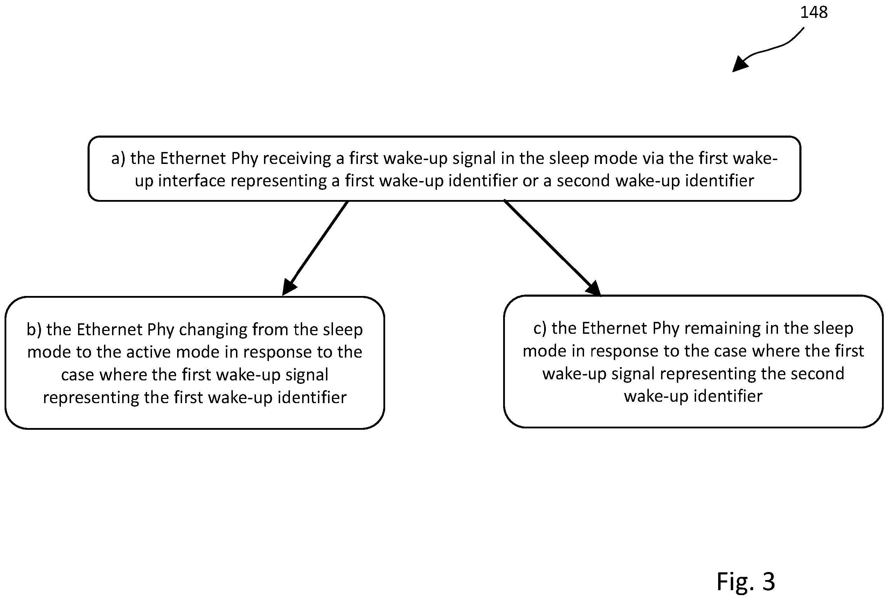

Figure 3 schematically shows a flow chart of an example of a method 148. The method 148 is a method for an Ethernet Phy 100, 120, 122, 124, 126. The method 148 may comprise the following steps:
a) the Ethernet Phy receiving a first wake-up signal in the sleep mode via the first wake-up interface representing a first wake-up identifier or a second wake-up identifier,
b) the Ethernet Phy changing from the sleep mode to the active mode in response to the case where the first wake-up signal representing the first wake-up identifier, and
c) the Ethernet Phy remaining in the sleep mode in response to the case where the first wake-up signal representing the second wake-up identifier.

In an example, reference may be made to the preceding explanations, advantageous features, technical effects and advantages in a manner analogous to that explained above for the Ethernet Phy 100, 120, 122, 124, 126 and/or the Ethernet Communication System 180.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. An Ethernet Phy comprising:
an analog interface for connecting to a communication media,
a digital interface, and
a wake-up interface,
wherein the Ethernet Phy is configured to change from a sleep mode to an active mode, or vice versa,
wherein the Ethernet Phy is configured to receive a first analog signal via the analog interface, wherein the first analog signal represents an Ethernet frame,
wherein the Ethernet Phy is configured to transmit the Ethernet frame in the active mode only via the digital interface,
wherein the Ethernet Phy is configured to receive a first wake-up signal in the sleep mode via the wake-up interface representing a first wake-up identifier or a second wake-up identifier,
wherein the Ethernet Phy is configured to change from the sleep mode to the active mode in response to the case where the first wake-up signal representing one of the first or second wake-up identifier, and
wherein the Ethernet Phy is configured to remain in the sleep mode in response to the case where the first wake-up signal representing the other one of the first or second wake-up identifier.

2. The Ethernet Phy according to the preceding claim, wherein the Ethernet Phy is configured to change from the sleep mode to the active mode in response to the case where the first wake-up signal representing the first wake-up identifier, and wherein the Ethernet Phy is configured to remain in the sleep mode in response to the case where the first wake-up signal representing the second wake-up identifier.

3. The Ethernet Phy according to any of the preceding claims, wherein the first wake-up identifier or the second wake-up identifier is encoded and/or modulated by the first wake-up signal.

4. The Ethernet Phy according to any of the preceding claims, wherein the first wake-up identifier addresses at least the Ethernet Phy or a first group of Ethernet Phys, and wherein the second wake-up identifier addresses at least another second Ethernet Phy or a second group of Ethernet Phys, in particular not including the Ethernet Phy.

5. The Ethernet Phy according to any of the preceding claims, wherein the first wake-up identifier represents a first wake-up scenario, and wherein the second wake-up identifier represents a second wake-up scenario.

6. The Ethernet Phy according to the preceding claim, if also dependent on claim 2, wherein the first wake-up scenario is stored by the Ethernet Phy and/or wherein the second wake-up scenario is not stored by the Ethernet Phy.

7. The Ethernet Phy according to any of the preceding claims, if also dependent on claim 2, wherein the Ethernet Phy is configured to change from the sleep mode to the active mode only in response to receiving the first wake-up signal representing a wake-up identifier, which addresses the Ethernet Phy and/or represents the stored first scenario.

8. The Ethernet Phy according to the preceding claims, wherein the first wake-up signal represents a first wake-up identifier, a second wake-up identifier or a third wake-up identifier, wherein the first wake-up identifier and the third wake-up identifier are stored by the Ethernet Phy, wherein the second wake-up identifier is not stored by the Ethernet Phy, and wherein Ethernet Phy is configured to change from the sleep mode to the active mode in response to the case where the first wake-up signal is representing the first wake-up identifier or the third wake-up identifier.

9. The Ethernet Phy according to any of the preceding claims, wherein the Ethernet Phy is configured to generate a second analog signal representing a first wake-up instruction at the analog interface in response to the first wake-up signal representing one of the wake-up identifiers.

10. The Ethernet Phy according to the preceding claim, wherein the first wake-up instruction represents or comprises the received wake-up identifier.

11. An **Ethernet Phy** comprising:
an analog interface for connecting to a communication media,
a digital interface, and
a wake-up interface,
wherein the Ethernet Phy is configured to change from a sleep mode to an active mode, or vice versa,
wherein the Ethernet Phy is configured to receive a first analog signal via the analog interface, wherein the first analog signal represents an Ethernet frame,
wherein the Ethernet Phy is configured to receive a third analog signal via the analog interface, wherein the third analog signal represents a second wake-up instruction,
wherein the Ethernet Phy is configured to change from the sleep mode to the active mode in response to receiving the second wake-up instruction,
wherein the Ethernet Phy is configured to transmit the Ethernet frame only in active mode via the digital interface, and
wherein the Ethernet Phy is configured to transmit a second wake-up signal representing a wake-up identifier via the wake-up interface in response to receiving the second wake-up instruction.

12. The Ethernet Phy according to claim 11, wherein the second wake-up instruction represents, comprises or is the first wake-up identifier.

13. The Ethernet Phy according to claim 11, wherein the second wake-up instruction and the first wake-up identifier addresses the same group of Ethernet Phys or represents the same wake-up scenario.

14. An **Ethernet System** comprising:
a first Ethernet Phy according to any of the preceding claims 1 to 10,
a second Ethernet Phy according to any of the preceding claim 11 to 13, and
an Ethernet switch unit,
wherein the Ethernet switch unit is connected to the digital interface of each of the Ethernet Phys,
wherein the Ethernet switch unit is configured to forward data from one of the digital interfaces to the at least one other digital interface, and
wherein the wake-up interfaces of the Ethernet Phys are coupled by a dedicated wake-up media.

15. **Method** for an Ethernet Phy, which comprises an analog interface for connecting to a communication media, a digital interface, and a wake-up interface, wherein the Ethernet Phy is configured to change from a sleep mode to an active mode, or vice versa, wherein the method comprising the following steps:
a) the Ethernet Phy receiving a first wake-up signal in the sleep mode via the first wake-up interface representing a first wake-up identifier or a second wake-up identifier,
b) the Ethernet Phy changing from the sleep mode to the active mode in response to the case where the first wake-up signal representing the first wake-up identifier, and
c) the Ethernet Phy remaining in the sleep mode in response to the case where the first wake-up signal representing the second wake-up identifier.
